# EUROPEAN PATENT APPLICATION

(11) **EP 3 951 193 A1**
(43) Date of publication of application: **09.02.2022**
(21) Application number: 20778441.4
(22) Date of filing: 05.03.2020
(51) Int. Cl.: F16C 17/10, F16C 33/20, F04D 29/02, F04D 29/046

(54) **SLIDE BEARING FOR ELECTRIC WATER PUMP**

(30) Priority: 28.03.2019 JP 2019063454
(71) Applicant: NTN Corporation, Osaka-shi, Osaka 550-0003 (JP)
(72) Inventor: YASUDA, Ken, Inabe-gun, Mie 511-0243 (JP)
(74) Representative: White, Duncan Rohan
(86) International application number: PCT/JP2020/009318
(87) International publication number: WO 2020/195660

(57) **Abstract**

To provide a sliding bearing for an electric water pump, the sliding bearing being superior in low friction performance in water or an antifreeze solution. A sliding bearing 3 is for an electric water pump that comprises a rotor 1 having the sliding bearing 3 that is formed in a substantially hollow cylindrical shape and rotatably supports a shaft, and a stator that is disposed on a circle coaxial with the shaft and rotationally drives the rotor 1. The sliding bearing 3 is formed of a resin composition that contains synthetic resin as a main component. The resin composition contains 5-30 vol% of carbon fiber that has a density of 2.00-2.25 g/cm³ and an average fiber length of 30-300 µm, to a whole volume of the resin composition.

## Description

### TECHNICAL FIELD

The present invention relates to a sliding bearing used in an electric water pump that comprises a rotor having the sliding bearing that rotatably supports a shaft, and a stator that rotationally drives the rotor. In particular, a sliding bearing for an electric water pump that cools an inverter or a combustion engine of a vehicle.

### BACKGROUND ART

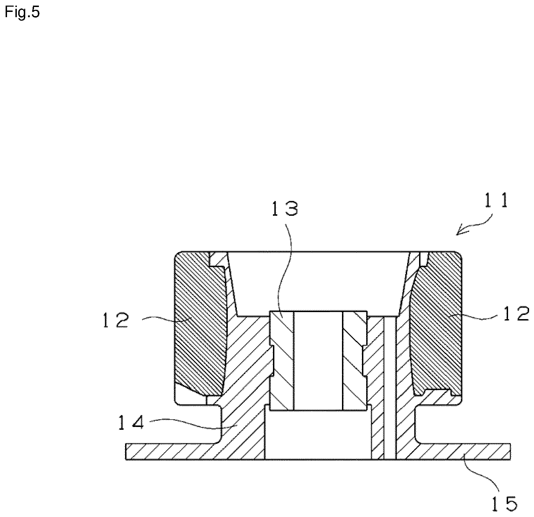

Conventionally, an electric water pump used for cooling an inverter or a combustion engine of a vehicle has been proposed in Patent Document 1. A structure of a rotor of this kind of the electric water pump will be described with reference to Fig. 5. A rotor 11 shown in Fig. 5 has a ring-like magnet 12, a sliding bearing 13, and a main body 14 with which an impeller mount part 15 is integrated. The sliding bearing 13 is formed in a substantially hollow cylindrical shape and rotatably supports a shaft of the pump. As a material of the sliding bearing 13, sintered carbon, thermoplastic resin such as polyphenylene sulfide (PPS) resin containing carbon, ceramic or the like is adopted. Here, the main body 14 is injection-molded using thermoplastic resin such as PPE (polyphenylene ether) in a state in which the magnet 12 and the sliding bearing 13 disposed coaxially inside the magnet 12 are arranged in a molding die. With this, the magnet 12, the sliding bearing 13, and the main body 14 are integrated.

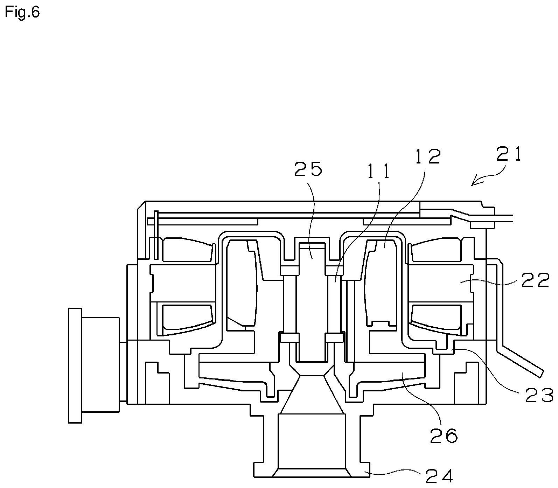

A structure and an action of the electric water pump using the rotor shown in Fig. 5 will be described with reference to Fig. 6. A pump 21 is provided with the rotor 11 housed in a case. The case is formed by integrating a stator 22 that has a coil wound on a stator core formed by laminating electromagnetic steel plates, a seal box 23 that separates cooling water and the stator, and a casing 24 that forms a pump chamber together with the seal box 23. One end of a shaft 25 formed of stainless steel or ceramic is inserted into a shaft supporting part of the seal box 23, and the other end thereof is supported by a shaft supporting part of the casing 24. The rotor 11 having the magnet 12 is rotated around the shaft 25 due to a magnetic field caused by energizing the coil of the stator 22. An impeller 26 is fixed to the rotor 11, and therefore the impeller 26 is also rotated in association with the rotation of the rotor 11. The cooling water sucked into the pump chamber is pressure-fed by the impeller 26.

Patent Document 2 discloses a sliding bearing for an electric water pump using a molded body of a phenol resin composition. The phenol resin composition contains phenol resin as a main component and contains at least (A) carbon fiber and (B) at least one solid lubricant selected from among polytetrafluoroethylene (PTFE) resin and graphite.

Patent Document 3 discloses a composite material in a resin composite sliding member to be used in water, the composite material includes PTFE resin containing at least one filling material selected from among carbon fiber, graphite, boron nitride, molybdenum disulfide, and tungsten disulfide.

### PRIOR ART DOCUMENT

### PATENT DOCUMENT

Patent Document 1: JP 4812787 B
Patent Document 2: JP 2017-025742 A
Patent Document 3: JP 2003-021144 A

### SUMMERY OF THE INVENTION

### PROBLEMS TO BE SOLVED BY THE INVENTION

An antifreeze solution such as long-life coolant containing ethylene glycol is generally adopted as cooling water for the electric water pump. In Patent Documents 1 to 3, the performance of the sliding bearing in the antifreeze solution has not been evaluated, and therefore there is room for improvement in low friction performance of the sliding bearing in water or an antifreeze solution.

An object of the present invention is, in order to solve such problems, to provide a sliding bearing for an electric water pump, the sliding bearing being superior in low friction performance in water or an antifreeze solution.

### MEANS FOR SOLVING THE PROBLEMS

A sliding bearing for an electric water pump of the present invention (hereinafter, also referred to as merely a sliding bearing) is for the electric water pump that comprises a rotor having the sliding bearing that is formed in a substantially hollow cylindrical shape and rotatably supports a shaft, and a stator that is disposed on a circle coaxial with the shaft and rotationally drives the rotor. The sliding bearing is formed of a resin composition that contains synthetic resin as a main component. The resin composition contains carbon fiber having a density of 2.00-2.25 g/cm³ and an average fiber length of 30-300 µm.

The resin composition may contain 5-30 vol% of the carbon fiber to a whole volume of the resin composition.

The resin composition may contain 1-20 vol% of PTFE resin and 1-30 vol% of graphite.

The synthetic resin may be PPS resin or polyether ether ketone (PEEK) resin.

The sliding bearing may be configured to be used such that at least one end surface among both end surfaces in an axial direction of the sliding bearing is slid on a mating material formed of stainless steel while receiving an axial load.

### EFFECT OF THE INVENTION

In the sliding bearing for the electric water pump of the present invention, the resin composition that forms the sliding bearing contains carbon fiber having a density of 2.00-2.25 g/cm³ and an average fiber length of 30-300 µm. Thus, the breakage of the carbon fiber when being slid on the mating material in water or an antifreeze solution and accumulation of the broken carbon fiber on the sliding surface become less, and therefore superior low friction performance is obtained.

The resin composition contains 5-30 vol% of carbon fiber having an average fiber length of 30-300 µm. Thus, the number of the fibers of the carbon fiber per unit volume of the resin composition is set appropriately, and accordingly points (load points) on the sliding surface where receive a load are increased. With this, water film is easily formed on the sliding surface in water or an antifreeze solution, and thereby low friction performance is obtained.

The resin composition contains 1-20 vol% of PTFE resin and 1-30 vol% of graphite. Consequently, a lower friction state is achieved. In addition, the mating material formed of stainless steel is hardly damaged.

### BRIEF DESCRIPTION OF THE DRAWINGS

Fig. 1 is an axial cross-sectional view of a rotor having a sliding bearing of the present invention.
Fig. 2 is a photo of a sliding surface of a cylindrical specimen in Example 3 taken by a metallurgical microscope.
Fig. 3 is a photo of a sliding surface of a cylindrical specimen in Comparative example 1 taken by a metallurgical microscope.
Fig. 4 is a photo of a sliding surface of a cylindrical specimen in Comparative example 2 taken by a metallurgical microscope.
Fig. 5 is an axial cross-sectional view of a conventional sliding bearing for an electric water pump.
Fig. 6 is an axial cross-sectional view of a conventional electric water pump.

### MODE FOR CARRYING OUT THE INVENTION

The present inventor conducted a study relating to a resin composition in a resin sliding bearing used in water or an antifreeze solution. As a result of the study, the present inventor found that low friction performance of the sliding bearing in water or an antifreeze solution can be improved by using carbon fiber having a density of 2.00-2.25 g/cm³. The present invention has been derived from such knowledge.

A sliding bearing of the present invention is used in an electric water pump that comprises a rotor having the sliding bearing that rotatably supports a shaft, and a stator that is disposed on a circle coaxial with the shaft and rotationally drives the rotor. The sliding bearing is formed of a resin composition containing synthetic resin such as PPS resin as a main component. The resin composition contains carbon fiber having a density of 2.00-2.25 g/cm³, and an average fiber length of 30-300 µm. It is preferable that the sliding bearing is an injection molded body.

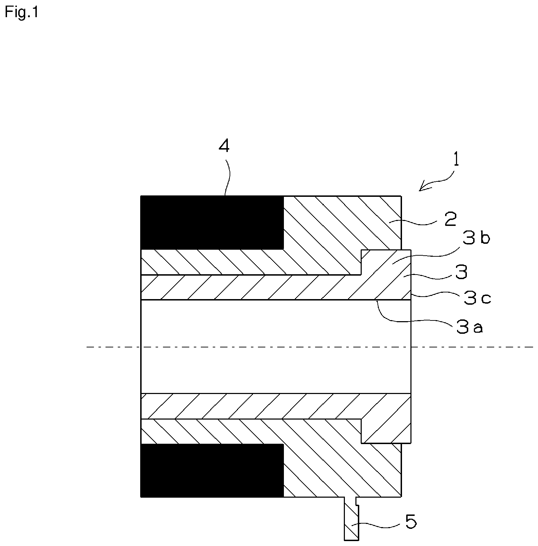

Fig. 1 shows one example of a rotor for an electric water pump provided with a sliding bearing of the prevent invention. Fig. 1 is a cross-sectional view of the rotor for the electric water pump. A configuration of the electric water pump in which the rotor is used is similar to that shown in Fig. 6. That is, the electric water pump comprises a shaft that serves as a center axis of the rotor, a stator that is disposed on a circle coaxial with the shaft and rotationally drives the rotor, and an impeller for pressure-feeding cooling water. As shown in Fig. 1, a rotor 1 of this embodiment is provided with a main body 2 that supports the impeller of the pump, a sliding bearing 3 that rotatably supports the shaft, a magnet 4 that is arranged to face the stator, and an impeller mount part 5. The sliding bearing and the main body including the magnet and the impeller may be integrated by means of, for example, insert molding.

In the embodiment shown in Fig. 1, as a shape of the main body, the impeller mount part 5 is formed integrally with main body 2 of the rotor 1. The present invention is not limited to this, and for example, a whole of the impeller may be formed integrally with the main body.

The sliding bearing 3 is a substantially hollow cylindrical body having a bearing hole 3a for rotatably supporting the shaft, at a center part in a radial direction. A cylindrical inner diametrical surface that forms the bearing hole 3a serves as a radial bearing surface (sliding surface). An outer diametrical shape of the sliding bearing 3 (for example, a ratio of a length of the cylindrical body or a ratio of a thickness of the cylindrical body to an outer diameter of the cylindrical body) is not especially limited, and therefore the outer diametrical shape may be set as needed in response to a configuration of the electric water pump. When the electric water pump is driven, at least one of both end surfaces in an axial direction of the sliding bearing 3 is slid on a mating material while receiving an axial load.

The sliding bearing 3 shown in Fig. 1 has a flange 3b at one end of the cylindrical body. In Fig. 1, an end surface 3c of the flange 3b projects in the axial direction relative to an end surface of the main body 2. When the pump is driven, the impeller is pressed to one side in the axial direction due to the differential pressure. At this time, the end surface 3c of the flange 3b serves as a thrust bearing surface, and the end surface 3c is slid on the mating material formed of, for example, stainless steel while receiving the axial load. The sliding bearing 3 having the configuration shown in Fig. 1 eliminates the need for another thrust bearing. Further, the sliding bearing 3 and the main body 2 that is insert-molded at the outer diametrical side of the sliding bearing are connected firmly by forming the flange 3b on the sliding bearing 3, and therefore dropping off or rotation when in use is prevented. For the similar purpose of enhancing the connection, a projection or a concave-convex shape may be formed in advance at the outer diametrical side of the sliding bearing 3.

In the present invention, the sliding bearing is formed of a resin composition containing synthetic resin as a main component. The resin composition contains carbon fiber having a density of 2.00-2.25 g/cm³ and an average fiber length of 30-300 µm. Here, the synthetic resin as a main component is compounded by 50 vol% or more, preferably 60 vol% or more, to the whole volume of the resin composition.

It is considered that breakage of the carbon fiber or accumulation of the broken carbon fiber on the sliding surface when slid on the mating material in water or an antifreeze solution is less by using the carbon fiber having the density of 2.00-2.25 g/cm³ adopted in the present invention compared to carbon fiber having a density of 1.60-1.99 g/cm³ and therefore low friction performance is obtained. In order to manufacture the carbon fiber having the density of 2.00-2.25 g/cm³, it is preferable to adopt a mesophase pitch that is easily graphitized, as a raw material. In a case in which an isotropic pitch or acrylonitrile (PAN) is adopted as a raw material, graphitization to obtain the density of 2.00-2.25 g/cm³ is difficult. The density of the carbon fiber is determined by a liquid displacement method, a sink/float method, or a density-gradient column method (JIS R 7603: 1999). The density of the carbon fiber is preferably set to 2.10-2.25 g/cm³.

The carbon fiber adopted in the present invention has an average fiber length of 30-300 µm. Example of the carbon fiber includes milled fiber produced by grinding chopped fiber. The average fiber length in the present invention denotes the number average fiber length. In a case in which the average fiber length is less than 30 µm, the obtained reinforcing effect becomes inferior and thereby wear resistance is deteriorated. In a case in which the average fiber length is more than 300 µm, the number of fibers per unit volume of the resin composition becomes less and thereby load points on the sliding surface are decreased. When the load points are decreased, water film is hardly formed on the sliding surface and thereby the friction coefficient is liable to be high. The average fiber length is preferably set to 50-200 µm.

Examples of the milled fiber that is commercially available adopted in the present include DIALEAD K223HM-200 µm (average fiber length of 200 µm, average fiber diameter of 11 µm, density of 2.22 g/cm³) and DIALEAD K223HM-50 µm (average fiber length of 50 µm, average fiber diameter of 11 µm, density of 2.22 g/cm³) produced by Mitsubishi Chemical Corporation, and HC-600-15M (average fiber length of 150 µm, average fiber diameter of 10 µm, density of 2.22 g/cm³) produced by Nippon Graphite Fiber Corporation.

The average fiber diameter of the carbon fiber adopted in the present invention is not especially limited, however it is set to, for example, 5-20 µm, preferably 10-20 µm. The average fiber diameter is measured by an electron microscope or an atomic force microscope generally used in this field. Further, the average fiber diameter is calculated as a number average fiber diameter based on the above measurement.

A compound amount of the carbon fiber having the density of 2.00-2.25 g/cm³ is set to preferably 5-30 vol%, more preferably set to 10-30 vol%, and further more preferably 10-20 vol% to the whole volume of the resin composition. In a case in which the compound amount of the carbon fiber is less than 5 vol%, the obtained reinforcing effect becomes inferior and thereby wear resistance might be deteriorated. Further, in a case in which the compound amount of the carbon fiber is more than 30 vol%, the cost is liable to be high.

A kind of the synthetic resin adopted in the above resin composition is not especially limited, however it is preferable to adopt super engineering plastic as the synthetic resin from a viewpoint of heat resistance. Specifically, examples of the synthetic resin include PPS resin, PEEK resin, polyamide-imide (PAI) resin, PTFE resin, polyvinylidene fluoride resin, liquid crystal polymer, polyether sulfone resin, polysulfone resin, polyarylate resin, polyether-imide resin, and polyimide resin. Considering the use in water or an antifreeze solution, PPS resin or PEEK resin having low water absorption performance and superior chemical resistance is preferable, and the PPS resin that is relatively low in cost among super engineering plastics is more preferable.

PPS resin is crystalline thermoplastic resin having a polymer structure in which benzene rings are linked by sulfides at the para-position. PPS resin has the melting point of approximately 280 °C and the glass transition temperature (Tg) of 93 °C and has extremely high rigidity, and superior heat resistance, dimensional stability, and wear resistance. There are several types of PPS resin including crosslinked type, semi-crosslinked type, straight chain type, and branched chain type defined by its molecular structure. In the present invention, any type of PPS resin may be adopted regardless of the molecular structure and molecular weight thereof.

It is preferable that the resin composition contains PTFE resin and graphite (graphite) in addition to the synthetic resin and the carbon fiber. The compound rate of the PTFE resin is set to preferably 1-20 vol%, more preferably 3-20 vol%, and further more preferably 10-20 vol% to the whole volume of the resin composition. Further, the compound rate of the graphite is set to preferably 1-30 vol%, more preferably 3-30 vol%, and further more preferably 10-30 vol% to the whole volume of the resin composition.

PTFE resin is a solid lubricant that may decrease a dynamic friction coefficient of a molded body in a boundary lubrication state such as a water-poor state that cannot cause water film. As the PTFE resin, any of molding powder obtained through a suspension polymerization method, fine powder obtained through an emulsion polymerization method, and recycled PTFE may be adopted. In order to stable the flowability of the resin composition, it is preferable to adopt the recycled PTFE that is hardly fibered by the shearing in molding and hardly increases the melting viscosity. The recycled PTFE denotes heat-treated powder (heat hysteresis has been applied), or powder that has been irradiated with γ rays or electron rays. Examples of the recycled PTFE include powder formed by heat-treating the molding powder or the fine powder, powder formed by irradiating the powder formed by heat-treating the molding powder or the fine powder, with γ rays or electron rays, powder formed by grinding a molding body of the molding powder or the fine powder, powder formed by irradiating the powder formed by grinding a molding body of molding powder or fine powder, with γ rays or electron rays, and powder formed by irradiating the molding powder or the fine powder with γ rays or electron rays.

Examples of the PTFE resin that is commercially available adopted in the present invention, include KTL-610, KTL-450, KTL-350, KTL-8N, and KTL-400H produced by KITAMURA LIMITED; Teflon (registered trademark) 7-J and TLP-10 produced by Chemours-Mitsui Fluoroproducts Co.,Ltd.; Fluon G163, L150J, L169J, L170J, L172J, and L173J produced by AGC Inc.; Polyflon M-15 and Lubron L-5 produced by DAIKIN INDUSTRIES, LTD.; and Dyneon TF9205 and TF9207 produced by 3M Japan Limited. Further, PTFE resin modified by a perfluoroalkylether group, a fluoroalkyl group, or a side chain group containing other fluoroalkyl may be adopted. The PTFE resin irradiated with γ rays or electron rays among the PTFE resins described above corresponds to KTL-610, KTL-450, KTL-350, KTL-8N, and KTL-8F produced by KITAMURA LIMITED; and Fluon L169J, L170J, L172J, and L173J produced by AGC Inc.

The graphite is a solid lubricant that may decrease, similar to the PTFE resin, a dynamic friction coefficient in a boundary lubrication state. The graphite has an advantage that improves wear property and elastic modulus of the sliding bearing and also improves dimensional accuracy of the sliding bearing in injection molding. Any of natural graphite and artificial graphite may be adopted as the graphite. A shape of a particle may be a scaly shape, a spherical shape, or the like. The scaly shape is more preferable because the particle is hardly dropped off in sliding. An example of the natural graphite includes ACP produced by Nippon Graphite Industries, Co.,Ltd. Examples of the artificial graphite include KS-6, KS-25, and KS-44 produced by Imerys Graphite & Carbon Japan Ltd.

In the sliding bearing of the present invention, it is preferable that at least one end surface among both end surfaces in the axial direction of the sliding bearing is slid on the mating material formed of stainless steel while receiving an axial load. The stainless steel is defined by JIS G 0203. By adopting the resin composition described above, the mating material formed of stainless steel is hardly damaged, and therefore a favorable sliding state is maintained.

A well-known additive for resin may be compounded into the resin composition described above to some extent that does not deteriorate an advantage of the present invention. Examples of the additive include a friction property improving agent such as boron nitride, molybdenum disulfide, and tungsten disulfide, and a coloring agent such as carbon black, iron oxide, and titanium oxide.

After the materials that forms the resin composition described above are mixed as needed using a Henschel mixer, a ball mixer, a ribbon blender or the like, the materials are melt-kneaded using a melt extruder such as a twin-screw melt extruder to obtain molding pellets. Further, during melt-kneading in a twin-screw melt extruder or the like, a side feed may be adopted for charging the filling material. The sliding bearing is molded by injection molding using these molding pellets.

The rotor for an electric water pump of the present invention is provided with the main body that supports the impeller of the pump, the sliding bearing that rotatably supports the shaft, and the magnet that is arranged to face the stator. In Fig. 1, the main body 2 is formed by a resin composition (hereinafter, referred to as a second resin composition) having different composition from that of a resin composition (hereinafter, referred to as a first resin composition) that forms the sliding bearing. Specifically, the sliding bearing formed in advance and the magnet are inserted into an injection molding die that molds the main body and then the second resin composition is injected and filled into the molding die, so that the main body is injection-molded. The condition or the like of the injection molding method (insert molding method) is not especially limited, and therefore a known method and a known condition may be adopted. With this, the sliding bearing, the main body, and the magnet are integrated, so that the rotor of the present invention is obtained.

The second resin composition contains synthetic resin (hereinafter, referred to as a second synthetic resin) as a main component. This synthetic resin is not especially limited, the synthetic resin (hereinafter, referred to as a first synthetic resin) exemplarily described in the first resin composition may be adopted. It is preferable that the second synthetic resin is a thermoplastic resin having the melting point equal to or less than that of the first synthetic resin. For example, in a case in which PPS resin is adopted as the first synthetic resin, it is preferable to adopt PBT resin or PPS resin as the second synthetic resin, and in this case, PPS resin is more preferable. In a case in which PEEK resin is adopted as the first synthetic resin, it is preferable to adopt PPS resin as the second synthetic resin. It is not preferable to adopt a thermoplastic resin having the melting point more than that of the first synthetic resin as the second synthetic resin because deformation is extremely caused on the sliding bearing in the insert molding.

It is preferable to compound a compounding material into the second resin composition that forms the main body. For example, a reinforcing material such as glass fiber, carbon fiber, whisker, mica, and talc may be compounded in order to enhance strength, elasticity, and dimensional accuracy, and an inorganic filling material such as mineral, calcium carbonate, and glass beads may be compounded in order to eliminate anisotropy of shrinkage in injection molding. As the compounding material, a low cost reinforcing material such as glass fiber is preferably compounded.

A resin composition that adopts PPS resin as the second synthetic resin and contains 5-30 vol% of the glass fiber to the whole volume of the resin composition is preferable as the second resin composition. It is preferable that the resin composition does not contain the carbon fiber.

The electric water pump that adopts the sliding bearing of the present invention and the rotor uses water or an antifreeze solution containing ethylene glycol, as cooling water. It is preferable that the compound rate of the ethylene glycol in the antifreeze solution is 30-70 vol% to the whole volume of the antifreeze solution.

### EXAMPLES

The raw materials of the resin compositions used in Examples and Comparative examples are collective described below. The raw materials (1) to (8) were melt-kneaded by a twin-screw melt extruder, so that pellets were produced.
(1) Cross-linked polyphenylene sulfide resin (PPS)
   Tosoh Corporation: B-042
(2) Polyether ether ketone resin (PEEK)
   Victrex Japan Inc.: PEEK 150P
(3) Mesophase pitch based carbon fiber (CF-1)
   Mitsubishi Chemical Corporation: DIALEAD K223HM-50 µm (average fiber length: 50 µm, average fiber diameter: 11 µm, density: 2.22 g/cm³)
(4) Mesophase pitch based carbon fiber (CF-2)
   Mitsubishi Chemical Corporation: DIALEAD K223HM-200 µm (average fiber length: 200 µm, average fiber diameter: 11 µm, density: 2.22 g/cm³)
(5) Isotropic pitch based carbon fiber (CF-3)
   Kureha Corporation: KRECA M-101S (average fiber length: 150 µm, average fiber diameter: 14.5 µm, density: 1.63 g/cm³)
(6) PAN based carbon fiber (CF-4)
   Toho Tenax Co., Ltd.: BESFIGHT HT M800 160MU (average fiber length: 160 µm, average fiber diameter: 7 µm, density: 1.77 g/cm³)
(7) PTFE resin (PTFE)
   KITAMURA LIMITED: KTL-610 (recycled PTFE)
(8) Graphite (GRP)
   Imerys Graphite & Carbon Japan Ltd.: KS-6 (artificial graphite, scaly shape)

The resin compositions of Examples 1 to 6 and Comparative examples 1 to 3 are shown in Tables 1 and 2. Cylindrical specimens having an inner diameter of 10 mm, an outer diameter of 17 mm and a height of 13 mm were produced from the resin compositions by means of injection molding. The dynamic friction coefficient in an antifreeze solution (ethylene glycol 50 vol% and water 50 vol%) of each of the produced cylindrical specimens and the disc-shape mating materials (SUS304) was measured using a ring on disc tester. The test condition is velocity of 125 m/minute, surface pressure of 1 MPa, and temperature of 50 °C. The measured values of the dynamic friction coefficients are also shown in Tables 1 and 2.

**Table 1**

| | | Example 1 | Example 2 | Example 3 | Example 4 | Example 5 | Example 6 |
|---|---|---|---|---|---|---|---|
| Composition (vol%) | (1) PPS | 82 | 90 | 60 | 57 | 50 | - |
| | (2) PEEK | - | - | - | - | - | 90 |
| | (3) CF-1 | 5 | - | - | - | - | - |
| | (4) CF-2 | - | 10 | 10 | 10 | 30 | 10 |
| | (5) CF-3 | - | - | - | - | - | - |
| | (6) CF-4 | - | - | - | - | - | - |
| | (7) PTFE | 10 | - | 20 | 3 | 10 | - |
| | (8) GRP | 3 | - | 10 | 30 | 10 | - |
| Dynamic friction coefficient | | 0.04 | 0.05 | 0.04 | 0.04 | 0.05 | 0.05 |

**Table 2**

| | | Comparative example 1 | Comparative example 2 | Comparative example 3 |
|---|---|---|---|---|
| Composition (vol%) | (1) PPS | 75 | 75 | 85 |
| | (2) PEEK | - | - | - |
| | (3) CF-1 | - | - | - |
| | (4) CF-2 | - | - | - |
| | (5) CF-3 | 10 | - | - |
| | (6) CF-4 | - | 10 | - |
| | (7) PTFE | 10 | 10 | 10 |
| | (8) GRP | 5 | 5 | 5 |
| Dynamic friction coefficient | | 0.08 | 0.11 | 0.07 |

As shown in Tables 1 and 2, the dynamic friction coefficients of Examples 1 to 6 are in a range of 0.04-0.05, which is lower than a range of 0.07-0.11 of the dynamic friction coefficients of Comparative examples 1 to 3. Consequently, the Examples 1 to 6 are superior in low friction performance in an antifreeze solution.

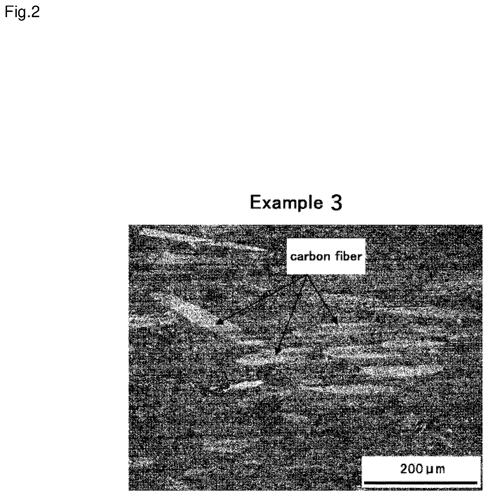

Further, photos taken by a metallurgical microscope of sliding surfaces of the cylindrical specimens of Example 3 and Comparative examples 1 and 2 are shown in Fig. 2 to Fig. 4.

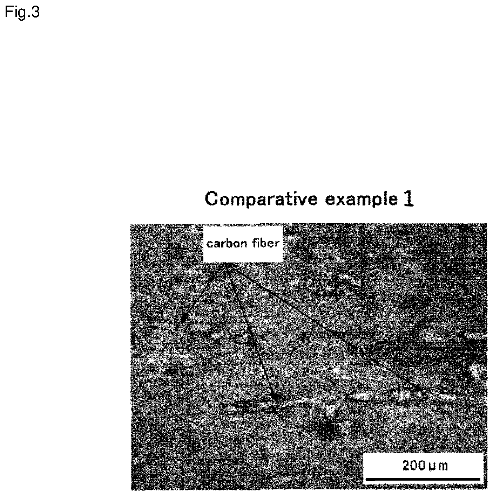

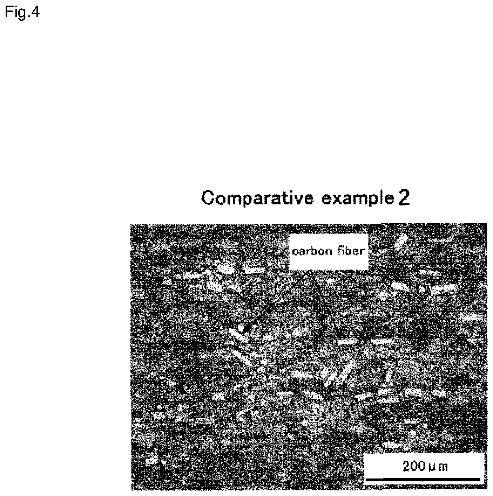

In Example 3 (Fig. 2), the fiber length of the carbon fiber is sustained and the breakage of the carbon fiber is hardly shown. On the other hand, in Comparative example 1 (Fig. 3) and Comparative example 2 (Fig. 4), the breakage of the carbon fiber is shown. In particular, in Comparative example 2 (Fig. 4), the broken carbon fiber is accumulated on the sliding surface. From the result of the observation, in Example 3, it is considered that a preferable sliding state is sustained and therefore low friction performance is obtained. On the other hand, in Comparative examples 1 and 2, it is considered that the broken carbon fiber causes the increase of the dynamic friction coefficient.

### INDUSTRIAL APPLICABILITY

The sliding bearing for an electric water pump of the present invention is superior in low friction performance in water or an antifreeze solution. Consequently, the sliding bearing of the present invention can be preferably used as a sliding bearing for an electric water pump that cools a combustion engine or an inverter of a vehicle.

### REFERENCE SIGNS LIST

- 1:: rotor
- 2:: main body
- 3:: sliding bearing
- 4:: magnet
- 5:: impeller mount part

## Claims

1. A sliding bearing for an electric water pump that comprises a rotor having the sliding bearing that is formed in a substantially hollow cylindrical shape and rotatably supports a shaft, and a stator that is disposed on a circle coaxial with the shaft and rotationally drives the rotor,
wherein:
the sliding bearing is formed of a resin composition that contains synthetic resin as a main component, and
the resin composition contains carbon fiber having a density of 2.00-2.25 g/cm³ and an average fiber length of 30-300 µm.

2. The sliding bearing for the electric water pump according to claim 1, wherein the resin composition contains 5-30 vol% of the carbon fiber to a whole volume of the resin composition.

3. The sliding bearing for the electric water pump according to claim 1, wherein the resin composition contains 1-20 vol% of polytetrafluoroethylene resin and 1-30 vol% of graphite.

4. The sliding bearing for the electric water pump according to claim 1, wherein the synthetic resin is polyphenylene sulfide resin or polyether ether ketone resin.

5. The sliding bearing for the electric water pump according to claim 1, configured to be used such that at least one end surface among both end surfaces in an axial direction of the sliding bearing is slid on a mating material formed of stainless steel while receiving an axial load.
